# EUROPEAN PATENT APPLICATION

(11) **EP 3 584 537 A1**
(43) Date of publication of application: **25.12.2019**
(21) Application number: 19180656.1
(22) Date of filing: 17.06.2019
(51) Int. Cl.: G01C 21/34

(54) **NAVIGATION DEVICE USING RECEPTION SENSITIVITY MAP AND METHOD OF OPERATING THE SAME**

(30) Priority: 20.06.2018 KR 20180070779
(71) Applicant: Humax Co., Ltd., Yongin-si, Gyeonggi-do 17040 (KR)
(72) Inventor: LYU, Jung Min, 12788 Gwangju-si, Gyeonggi-do (KR)
(74) Representative: Zardi, Marco

(57) **Abstract**

The present disclosure discloses a navigation device using a reception sensitivity map and a method of operating the same. According to one embodiment of the present disclosure, the navigation device using a reception sensitivity map includes a reception sensitivity map generator for generating a reception sensitivity map based on reception sensitivity information on a broadcast signal; a matching map generator for loading a navigation map corresponding to an identified route based on route search history information, and matching a reception sensitivity map of an area included in the loaded navigation map with the loaded navigation map to generate a matching map; a fringe area determining processor for receiving information on a point of departure and a destination input by a user through a user inputter, and determining a fringe area between the point of departure and the destination using the generated matching map; a travel time calculator for guiding a route between the point of departure and the destination using the generated matching map, and calculating time required to travel to the determined fringe area; and a content controller for controlling a screen display or a sound outputter to display one or more of departure time, average travel speed, and information on rest stop locations based on the calculated travel time.

## Description

### CROSS-REFERENCE TO RELATED APPLICATION

This application claims priority to Korean Patent Application No. 10-2018-0070779, filed on June 20, 2018 in the Korean Intellectual Property Office, the disclosure of which is incorporated herein by reference.

### BACKGROUND OF THE DISCLOSURE

### Field of the Disclosure

The present disclosure relates to a navigation device using a reception sensitivity map and a method of operating the same, and more particularly, to a navigation device capable of matching the reception sensitivity map of a broadcast signal to a navigation map and guiding a user to avoid a fringe area based on the matched navigation map to receive broadcast content and a method of operating the navigation device.

### Description of the Related Art

Nowadays, development of digital processing and wireless communication technologies enables use of various digital services in a vehicle, which improves driver or passenger convenience.

In particular, when driving a vehicle, an embedded or external navigation system can provide a variety of information to a driver.

In addition to a basic function of storing map information, a navigation system can operate in conjunction with a global positioning system (GPS) to provide real-time driving information, driving coordinates, a travel distance to a destination, current speed, an optimal route to a destination, and the like.

In general, when an optimal route to a destination is provided through a navigation system, a route corresponding to the shortest distance from a current vehicle position to the destination or a route that meets conditions required by a driver is provided.

However, since the conventional navigation system described above provides an optimal route simply based on distance on the road or conditions set by a driver, the driver may enter a fringe area where radio waves cannot reach.

Therefore, when a vehicle enters an area where radio frequency (RF) cannot be received, listening or watching of important broadcast content may be interrupted. In this situation, a user feels inconvenienced because the user cannot listen to or watch the broadcast content at all.

In addition, when a vehicle enters an area where radio frequency (RF) cannot be received, reception sensitivity may be poor, which makes it impossible to listen to or watch important broadcast content.

### [Related Documents]

### [Patent Documents]

Korean Patent Application Publication No. 10-2009-0121067, "METHOD OF SETTING ROUTE IN NAVIGATION SYSTEM FOR VEHICLE"

### SUMMARY OF THE DISCLOSURE

Therefore, the present disclosure has been made in view of the above problems, and it is an object of the present disclosure to support reception of digital broadcast content by providing a route to a user to avoid a fringe area where radio waves cannot reach when the user travels by vehicle according to received route guidance while receiving digital broadcast content.

It is another object of the present disclosure to control a display so that a method of receiving broadcast content is displayed rather than to provide a route that bypasses a fringe area where radio waves cannot reach.

It is yet another object of the present disclosure to provide time information so as to avoid a time when a fringe area occurs between a point of departure and a destination.

In accordance with the present disclosure, the above and other objects can be accomplished by the provision of a navigation device using a reception sensitivity map including a reception sensitivity map generator for generating a reception sensitivity map based on reception sensitivity information on a broadcast signal; a matching map generator for loading a navigation map corresponding to an identified route based on route search history information, and matching a reception sensitivity map of an area included in the loaded navigation map with the loaded navigation map to generate a matching map; a fringe area determining processor for receiving information on a point of departure and a destination input by a user through an interface, and determining a fringe area between the point of departure and the destination using the generated matching map; a travel time calculator for guiding a route between the point of departure and the destination using the generated matching map, and calculating time required to travel to the determined fringe area; and a content controller for controlling a screen display or a sound outputter to output one or more of departure time, average travel speed, and information on rest stop locations based on the calculated travel time.

According to one embodiment of the present disclosure, the travel time calculator may collect information on traffic conditions based on the received broadcast signal, and calculate the travel time using the collected information on traffic conditions and vehicle speed.

According to one embodiment of the present disclosure, when a vehicle equipped with the navigation device is located in the determined fringe area, the content controller may indirectly receive the broadcast signal through a portable terminal of the user to provide broadcast content.

According to one embodiment of the present disclosure, the content controller may determine the relationship between the displayed broadcast content and any one of a real-time channel and a media channel, and may change the playback time of the broadcast content in the determined fringe area when the broadcast content is associated with the media channel.

According to one embodiment of the present disclosure, when the broadcast content is associated with the media channel, the content controller may set a time stamp on the broadcast content before entering the determined fringe area, and may provide the broadcast content from the set time stamp after passing through the fringe area.

According to one embodiment of the present disclosure, the content controller may determine whether reception of broadcast content through the mobile communication network of a portable terminal of the user is possible in the fringe area, and when reception of the broadcast content is possible, the content controller may control the screen display or the sound outputter to output guidance information indicating that reception of the broadcast content is possible.

According to one embodiment of the present disclosure, the reception sensitivity map generator may generate the reception sensitivity map using any one of accumulated data based on information on the strength of a broadcast signal for each area received from the broadcast system and the reception strength of the broadcast signal.

According to one embodiment of the present disclosure, the matching map generator may generate the matching map including the reception sensitivity information of the broadcast signal by matching a plurality of colors on the navigation map using the generated reception sensitivity map according to the reception sensitivity of the broadcast signal.

According to one embodiment of the present disclosure, the content controller may calculate adjusted driving information including departure time, average travel speed, and stay time at the rest stop so that consumption of broadcast content is completed before reaching the fringe area from the point of departure, and may control the screen display or the sound outputter to display the adjusted driving information.

According to one embodiment of the present disclosure, the content controller may calculate adjusted driving information including departure time, average travel speed, and stay time at the rest stop to avoid a time period during which the determined fringe area occurs, and may control the screen display or the sound outputter to display the adjusted driving information.

In accordance with an aspect of the present disclosure, the above and other objects can be accomplished by the provision of a method of operating a navigation device using a reception sensitivity map including a step of, in a reception sensitivity map generator, generating a reception sensitivity map based on reception sensitivity information on a broadcast signal; a step of, in a matching map generator, loading a navigation map corresponding to an identified route based on route search history information, and matching a reception sensitivity map of an area included in the loaded navigation map with the loaded navigation map to generate a matching map; a step of, in a fringe area determining processor, receiving information on a point of departure and a destination input by a user through an interface, and determining a fringe area between the point of departure and the destination using the generated matching map; a step of, in a travel time calculator, guiding a route between the point of departure and the destination using the generated matching map, and calculating time required to travel to the determined fringe area; and a step of, in a content controller, controlling a screen display or a sound outputter to output one or more of departure time, average travel speed, and information on rest stop locations based on the calculated travel time.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a block diagram for explaining an environment for receiving broadcast content according to one embodiment of the present disclosure;
FIG. 2 is a block diagram for explaining the components of a navigation device according to one embodiment of the present disclosure;
FIG. 3 is a block diagram for explaining the components of a navigation controller according to one embodiment of the present disclosure;
FIG. 4 is a drawing showing an example of displaying a fringe area between a point of departure and a destination in a navigation device; and
FIGS. 5 and 6 are flowcharts for explaining a method of operating a navigation device according to one embodiment of the present disclosure.

### DETAILED DESCRIPTION OF THE DISCLOSURE

The embodiments will be described in detail herein with reference to the drawings.

It should be understood that the present disclosure is not limited to the embodiments according to the concept of the present disclosure, but includes changes, equivalents, or alternatives falling within the spirit and scope of the present disclosure.

In the following description of the present disclosure, a detailed description of known functions and configurations incorporated herein will be omitted when it may make the subject matter of the present disclosure unclear.

The terms used in the specification are defined in consideration of functions used in the present disclosure, and can be changed according to the intent or conventionally used methods of clients, operators, and users. Accordingly, definitions of the terms should be understood on the basis of the entire description of the present specification.

In description of the drawings, like reference numerals may be used for similar elements.

The singular expressions in the present specification may encompass plural expressions unless clearly specified otherwise in context.

In this specification, expressions such as "A or B" and "at least one of A and/or B" may include all possible combinations of the items listed together.

Expressions such as "first" and "second" may be used to qualify the elements irrespective of order or importance, and are used to distinguish one element from another and do not limit the elements.

It will be understood that, when an element (e.g., first) is referred to as being "connected to" or "coupled to" another element (e.g., second), it may be directly connected or coupled to the other element or an intervening element (e.g., third) may be present.

As used herein, "configured to" may be used interchangeably with, for example, "suitable for", "ability to", "changed to", "made to", "capable of', or "designed to" in terms of hardware or software.

In some situations, the expression "device configured to" may mean that the device "may do ∼" with other devices or components.

For example, in the sentence "processor configured to perform A, B, and C", the processor may refer to a general purpose processor (e.g., CPU or application processor) capable of performing corresponding operation by running a dedicated processor (e.g., embedded processor) for performing the corresponding operation, or one or more software programs stored in a memory device.

In addition, the expression "or" means "inclusive or" rather than "exclusive or".

That is, unless otherwise mentioned or clearly inferred from context, the expression "x uses a or b" means any one of natural inclusive permutations.

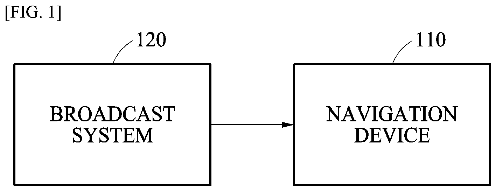

FIG. 1 is a block diagram for explaining an environment for receiving broadcast content according to one embodiment of the present disclosure.

Specifically, FIG. 1 illustrates an environment in which a navigation device receives broadcast content from a broadcast system of a broadcast company through radio frequencies.

Referring to FIG. 1, in an environment for receiving broadcast content, a navigation device 110 receives broadcast signals from a broadcast system 120 of a broadcast company.

For example, the broadcast system 120 may provide broadcast content to the navigation device 110.

The broadcast system 120 may provide digital broadcast content according to digital broadcast standards.

For example, digital broadcast standards may include European digital audio broadcast (hereinafter, referred to as 'DAB') based on Eureka-147 [ETSI EN 300 401], digital video broadcast-handheld (hereinafter, referred to as 'DVB-H'), MediaFLO being led by Qualcomm (California, U.S.), Korean digital multimedia broadcast (hereinafter, referred to as 'DMB'), and the like.

In addition to mobile communication terminals such as a personal digital assistant (PDA), a portable multimedia player (PMP), a mobile phone, and a smartphone, the navigation device 110 may include various types of terminals capable of receiving digital broadcast, such as a game console.

In addition, the navigation device 110 may be an audio/video device capable of transmitting and receiving navigation data including map data through communication with a mobile communication terminal. In this case, the audio/video device may perform a function of outputting a screen signal and an audio signal provided by the mobile communication terminal.

In addition, the navigation device 110 may receive reception sensitivity information in real time, generate a matching map by matching a reception sensitivity map to a navigation map according to the received information, and provide a user with a change in a fringe area based on the generated matching map in real time.

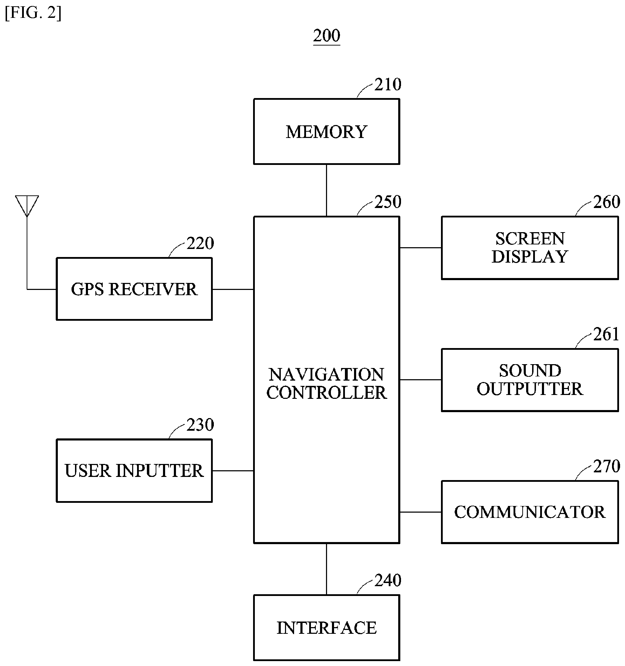

FIG. 2 is a block diagram for explaining the components of a navigation device according to one embodiment of the present disclosure.

Referring to FIG. 2, a navigation device 200 may include a memory 210, a GPS receiver 220, a user inputter 230, an interface 240, a navigation controller 250, a screen display 260, a sound outputter 261, and a communicator 270.

The memory 210 may store data corresponding to a reception sensitivity map, a navigation map, a matching map, or broadcast content.

The memory 210 may store data such as basic programs, application programs, and setting information for operation of the navigation device 200.

For example, the memory 210 may store at least one set of instructions (e.g., applications) for managing files according to various embodiments.

In addition, the memory 210 may provide stored data in response to a request of the navigation controller 250. For example, the memory 210 may store instructions or data related to at least one component of the navigation device 200 other than the memory 210.

In addition, the memory 210 is included in the navigation device 200, and may be referred to as an internal storage or an internal storage device.

The memory 210 may include at least one storage medium of a flash memory type memory, a hard disk type memory, a multimedia card micro type memory, a card type memory (e.g., SD or XD memory), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disc.

The GPS receiver 220 may receive information on the current location of a vehicle from a global positioning system (GPS) satellite.

For example, the GPS receiver 220 may receive GPS data to provide maps and information on driving coordinates, a travel distance to a destination, current speed, and an optimal route to a destination when a user drives a vehicle.

The user inputter 230 may generate input data for controlling operation of the navigation device 200.

For example, a user may input information on any one of a point of departure and a destination via the user inputter 230.

That is, the user inputter 230 may transmit information on any one of a point of departure or a destination input by a user to the navigation controller 250.

For example, the user inputter 230 may be composed of a key pad, a dome switch, a touch pad (static pressure/power failure), a jog wheel, a jog switch, and the like.

For example, the user inputter 230 and the screen display 260 may configure the interface 240.

That is, the interface 240 may include the user inputter 230 and the screen display 260.

The interface 240 may include a touchscreen capable of performing operation of a predetermined capability set through a screen including a touch sensing area. The interface 240, the user inputter 230, and the screen display 260 are separately shown for convenience of explanation and for functional classification. However, in an actual implementation, the function of the interface 240 may be provided through the screen display 260.

For example, since basic input and control for operation of the navigation device 200 may be performed in the interface 240, the number of physical input and control devices such as push buttons, keyboards, and dials installed in the navigation device 200 may be reduced. Here, the physical input and control devices may include the user inputter 230.

According to one embodiment of the present disclosure, the interface 240 may receive information on any one of a point of departure or a destination input by a user and provide the received information to the navigation controller 250.

For example, the interface 240 may display a plurality of touch items so as to perform operation of a predetermined capability set.

In addition, the interface 240 may provide a user interface such as a main menu or a root menu when a user touches the interface 240.

According to one embodiment, the interface 240 may provide a user interface between the navigation device 200 and a user.

For example, the interface 240 may include touch sensing surfaces, sensors, or a collection of sensors that accept input from a user based on haptic or tactile contact.

In addition, the interface 240 may convert sensed contact into interaction with user interfaces (graphics, one or more soft keys, icons, web pages, images, or the like) displayed on the interface 240.

In one embodiment of the present disclosure, a contact point between the interface 240 and a user may correspond to any object or appendage such as the user's finger.

According to another embodiment, the interface 240 may serve as an interface for all external devices and servers connected to the navigation device 200.

The navigation controller 250 may include at least one processor configured to control operation of the components of the navigation device 200.

For example, the navigation controller 250 may control operations of the memory 210, the GPS receiver 220, the user inputter 230, the interface 240, the screen display 260, the sound outputter 261, and the communicator 270.

The navigation controller 250 may generate a reception sensitivity map for a radio frequency signal for each broadcast channel or broadcast area based on information of radio frequency signal reception sensitivity for each broadcast channel or broadcast area, and match the reception sensitivity map to a navigation map. Based on the matching result, when a fringe area where broadcast reception is difficult exists between a point of departure and a destination, the navigation controller 250 may control a navigation device to output announcement recommending speed adjustment, thereby enabling a user to receive the desired broadcast content.

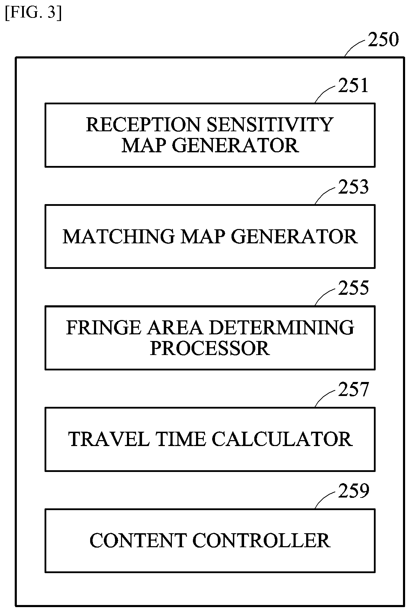

Operation of the navigation controller 250 will described in detail with reference to FIG. 3.

According to one embodiment of the present disclosure, the screen display 260 may display a matching map generated by matching a reception sensitivity map to a navigation map according to control by the navigation controller 250.

For example, the screen display 260 may include a display.

That is, the navigation controller 250 may control the display to display a matching map including at least one of departure time, information on rest stop locations, and average travel speed associated with fringe areas.

The screen display 260 may include at least one of a liquid crystal display, a thin film transistor-liquid crystal display, an organic light-emitting diode, a flexible display, and a 3D display.

The screen display 260 and the sound outputter 261 may provide the output data of the navigation device 200 to a user.

For example, the sound outputter 261 may output various audio signals. For example, the sound outputter 261 may output an audio signal included in a broadcast signal received from a broadcast system.

In addition, the sound outputter 261 may output guidance information on routes, obstacles, vehicle moving speed, average speed, rest area locations, or the like as an audio signal. In this case, the term "rest area" may be expressed as a rest stop in this specification, and may be used as a concept encompassing a general service area equipped with a service facility and a parking area or truck stop where a user parks and rests.

The communicator 270 may receive broadcast signals from a broadcast system and provide data corresponding to the received broadcast signals to the navigation controller 250.

For example, the data corresponding to broadcast signals may include one or more of broadcast content and broadcast reception sensitivity information.

For example, the communicator 270 may include one or more components that support wireless communication between the navigation device 200 and a network in which a broadcast system is located.

The communicator 270 may perform a function of converting between a baseband signal and a bitstream according to the physical layer standard of a system.

For example, the communicator 270 may generate a complex symbol by encoding and modulating a bitstream transmitted during data transmission.

In addition, the communicator 270 may recover a received bitstream by demodulating and decoding a baseband signal upon receiving data.

In addition, the communicator 270 may up-convert a baseband signal into a radio frequency (RF) band signal and transmit the RF band signal through an antenna. In addition, the communicator 270 may down-convert an RF band signal received through an antenna into a baseband signal.

In addition, the communicator 270 may include a transmission filter, a reception filter, an amplifier, a mixer, an oscillator, a digital-to-analog converter (DAC), an analog-to-digital converter (ADC), and the like.

In addition, the communicator 270 may include different communication modules for processing signals of different frequency bands.

More specifically, the communicator 270 may include a mobile communicator, a wireless Internet module, a near field communicator, a location information transceiver, and the like.

For example, the mobile communicator may transmit radio signals to at least one of a base station, an external terminal, and a server in a mobile communication network or may receive radio signals from at least one of a base station, an external terminal, and a server in a mobile communication network. Here, the radio signals may include voice signals, video call signals, and various types of data according to transmission/reception of text/multimedia messages.

For example, the wireless Internet module refers to a module for wireless Internet access, and may be installed inside or outside the communicator 270. Wireless LAN (WLAN), e.g., Wi-Fi, wireless broadband (WiBro), world interoperability for microwave access (WiMAX), high speed downlink packet access (HSDPA), and the like may be used as wireless Internet technologies.

For example, the near field communicator may refer to a module for near field communication. Bluetooth, radio frequency identification (RFID), infrared data association (IrDA), ultra-wideband (UWB), ZigBee, Z-WAVE, and the like may be used as near field communication technologies.

FIG. 3 is a drawing for explaining a specific example of the configuration of the navigation controller of FIG. 2.

Referring to FIG. 3, the navigation controller 250 may include a reception sensitivity map generator 251, a matching map generator 253, a fringe area determining processor 255, a travel time calculator 257, and a content controller 259. According to one embodiment of the present disclosure, the reception sensitivity map generator 251 may generate a reception sensitivity map based on reception sensitivity information on a broadcast signal.

The reception sensitivity map generator 251 may generate a reception sensitivity map using any one of accumulated data based on information on the strength of a broadcast signal for each area received from a broadcast system through the communicator 270 and the reception strength of a broadcast signal.

According to one embodiment of the present disclosure, when the reception strength of a broadcast signal received in a specific area is higher than a reference value, the reception sensitivity map generator 251 may judge that the reception sensitivity is high, and may generate a reception sensitivity map in which the specific area is displayed in green according to the reception sensitivity determined to be high.

When the reception strength of a broadcast signal received in a specific area is lower than a reference value, the reception sensitivity map generator 251 may judge that the reception sensitivity is low, and may generate a reception sensitivity map in which the specific area is displayed in red according to the reception sensitivity determined to be low.

More specifically, according to one embodiment of the present disclosure, the reception sensitivity map generator 251 may include a broadcast signal collector (not shown), a reception strength comparator (not shown), and a reception sensitivity map manager (not shown).

For example, the broadcast signal collector (not shown) may accumulate and store data about the strength of a broadcast signal in the memory 210 based on information on the strength of a broadcast signal for each region or broadcast channel received from a broadcast system.

For example, the broadcast signal collector (not shown) may receive a place name input by a user through the interface 240, and may collect accumulated data about broadcast signal strength from a current location to a location corresponding to the input place name.

According to one embodiment, the reception strength comparator (not shown) may compare the reception strength of a broadcast signal for each region and a reference value.

In addition, when the reception strength of a broadcast signal is higher than a reference value, the reception strength comparator (not shown) may judge that reception sensitivity is high.

In addition, when the reception strength of a broadcast signal is lower than a reference value, the reception strength comparator (not shown) may judge that reception sensitivity is low.

For example, the reception sensitivity map manager (not shown) may generate a reception sensitivity map in which a specific area is displayed in green according to reception sensitivity determined to be high and store the reception sensitivity map in the memory 210.

In addition, the reception sensitivity map manager (not shown) may generate a reception sensitivity map in which a specific area is displayed in red according to reception sensitivity determined to be low and store the reception sensitivity map in the memory 210.

That is, the reception sensitivity map manager (not shown) may generate a reception sensitivity map in which a specific area is displayed in green, orange, red, or the like according to reception sensitivity and store the reception sensitivity map in the memory 210.

For example, when the reception strength of a broadcast signal is high, the navigation device 250 may provide broadcast content without interruption. When the reception strength of a broadcast signal is low, the navigation device 250 may not be able to provide broadcast content.

Therefore, the navigation device 250 according to one embodiment of the present disclosure may generate a matching map using a reception sensitivity map generated based on a broadcast signal.

According to one embodiment of the present disclosure, the matching map generator 253 may generate a matching map by matching a navigation map with a reception sensitivity map.

According to one embodiment of the present disclosure, the matching map generator 253 may search for a recent destination or a travel route preferred by a user based on route search history information. Here, the travel route preferred by a user may be referred to as a preferred route.

That is, the matching map generator 253 may identify a preferred route based on route search history information, and may load a navigation map including the identified preferred route.

For example, route search history information may be accumulated in the memory 210 every time a user inputs a destination.

In addition, the matching map generator 253 may generate a matching map by matching a reception sensitivity map with a navigation map corresponding to a preferred route.

For example, the matching map generator 253 may generate a matching map on a preferred route corresponding to a route through which a user has recently traveled frequently.

Therefore, the matching map generator 253 may load a navigation map corresponding to an identified route based on route search history information, and may generate a matching map by matching the navigation map with a reception sensitivity map of an area included in the loaded navigation map.

According to the present disclosure, a matching map may be generated based on route search history information, and the matching map may be used to quickly determine a fringe area that may be included in a route through which a user will travel.

In addition, since route search history information is accumulated in the matching map generator 253, and the matching map generator 253 periodically updates matching maps, the matching map generator 253 may periodically update a matching map including an identified preferred route.

In addition, when the matching map generator 253 generates a matching map by matching a reception sensitivity map with a navigation map corresponding to a preferred route, the matching map generator 253 may perform mapping of a reception sensitivity map on a periodically updated navigation map.

In addition, the present disclosure may simplify a process for generating a matching map and reduce consumption of data resources by matching a reception sensitivity map with a navigation map including a preferred route.

In addition, when a route between a point of departure and a destination input by a user is a new route other than a previously searched route, the matching map generator 253 may generate a matching map for the new route.

For example, the matching map generator 253 may generate a matching map including the reception sensitivity information of a broadcast signal by matching a plurality of colors on a navigation map using a reception sensitivity map according to the reception sensitivity of the broadcast signal.

In addition, the matching map generator 253 may generate a matching map corresponding to a navigation map including information on vehicle location and traffic density on the road received from the satellites.

According to one embodiment of the present disclosure, the matching map generator 253 may include a target map loader (not shown), a map matcher (not shown), and a matching map manager (not shown).

For example, the target map loader (not shown) loads a navigation map corresponding to a reception sensitivity map from the memory 210.

For example, the target map loader (not shown) receives a place name input by a user, loads a reception sensitivity map from a current location to a location corresponding to the input place name, and loads a navigation map corresponding to the loaded reception sensitivity map.

According to one embodiment, the map matcher (not shown) may superimpose the color of a reception sensitivity map on a navigation map by matching the coordinates of the reception sensitivity map and the coordinates of the navigation map.

For example, the map matcher (not shown) may match a plurality of colors on a navigation map according to the reception sensitivity of a broadcast signal.

According to one embodiment of the present disclosure, the map matcher (not shown) may match a plurality of colors on a navigation map based on a reception sensitivity map for a route from a point of departure to a destination.

According to one embodiment of the present disclosure, the matching map manager (not shown) may generate a matching map including the reception sensitivity information of a broadcast signal by matching a plurality of colors on a navigation map using a reception sensitivity map according to the reception sensitivity of the broadcast signal, and may store the generated matching map in the memory 210.

According to one embodiment of the present disclosure, the matching map generator 253 may store information on map data, a fringe area where radio waves cannot reach, and an optimal route between a point of departure and a destination in the memory 210.

According to one embodiment of the present disclosure, the fringe area determining processor 255 receives information on a point of departure and a destination input by a user through the interface 240.

That is, the fringe area determining processor 255 may receive information on a point of departure and a destination provided by a user through the interface 240.

In general, the navigation device 250 may automatically recognize a point of departure based on a global positioning system (GPS).

That is, even when receiving only information on a destination, the fringe area determining processor 255 may determine a fringe area.

In addition, the fringe area determining processor 255 may determine a fringe area between a point of departure and a destination using a matching map.

According to one embodiment of the present disclosure, the travel time calculator 257 may guide a route between a point of departure and a destination using a matching map, and may calculate a travel time to a determined fringe area.

In addition, the travel time calculator 257 may collect information on traffic conditions based on a broadcast signal, and may calculate a travel time using the collected information on traffic conditions and vehicle speed.

For example, the travel time calculator 257 may calculate time required to travel to a fringe area in consideration of traveling speed and traffic conditions on a travel route.

According to one embodiment of the present disclosure, the content controller 259 may control the screen display 260 or the sound outputter 261 to display one or more of departure time, average travel speed, and information on rest stop locations based on the calculated travel time.

For example, when a vehicle equipped with the navigation device is located in a fringe area, the content controller 259 may indirectly receive a broadcast signal through a user's portable terminal to provide broadcast content.

In addition, in a state wherein specific broadcast content is currently being received, the content controller 259 may control the screen display 260 or the sound outputter 261 to output a message recommending that a user drives a vehicle at a specific speed or less so that the user may listen to or watch certain broadcast content as much as possible before reaching a fringe area considering an estimated travel time to the fringe area.

For example, the content controller 259 may check the remaining time of broadcast content from the metadata of the broadcast content, and may guide a user to postpone departure time (e.g., it is informed that, when a user departs 30 minutes later, the user may receive broadcast content without interruption before reaching a fringe area), or may notify the closest rest area before reaching a fringe area at the time of departure and inform a user of rest time at the rest area so that the user may receive desired broadcast content without interruption before reaching a fringe area.

Accordingly, the content controller 259 may calculate adjusted driving information including departure time, average travel speed, and stay time at the rest stop so that consumption of broadcast content is completed before reaching a fringe area from a point of departure, and may control the screen display 260 or the sound outputter 261 to display the adjusted driving information.

In addition, it may not be possible to complete consumption of broadcast content selected by a current user before reaching a fringe area from a point of departure. That is, when complete consumption of broadcast content is not possible before reaching the fringe area from the point of departure, the content controller 259 may confirm the type information of the broadcast content, confirm the broadcast type information of another channel capable of being received upon reaching the fringe area, and switch a broadcast reception channel to another channel that transmits broadcast similar to the type information of the broadcast content when the actual reception sensitivity of the broadcast content is less than a predetermined value.

For example, the type information of broadcast content selected by a current user may be classified into current affairs programs, news, music broadcast, traffic broadcast, movie introduction, sports broadcast, and the like. In addition, music broadcast may be classified into classical music, popular songs, pop songs, and the like.

When broadcast content selected by a current user is news, the content controller 259 may switch broadcast reception to a channel that transmits news among other receivable channels upon reaching a fringe area or when the reception sensitivity of news currently being watched becomes less than a predetermined value.

In this case, when there is no broadcast type similar to the broadcast content selected by a current user among other receivable channels, the content controller 259 may switch broadcast reception to a channel that transmits broadcast types preferred by a user.

The content controller 259 may guide a route in consideration of a reception sensitivity map, and may indirectly receive broadcast through a portable terminal capable of receiving broadcast signal in a radio shadow area or a region where broadcast signal reception is weak.

In addition, the content controller 259 may guide a route in consideration of a reception sensitivity map. In addition, the content controller 259 may determine whether broadcast content can be received through the mobile communication data network of a portable terminal in a region where the intensity of a broadcast signal is less than a predetermined reference value, and may inform a user that broadcast content may be received by executing the broadcast application (e.g., radio receiving application) of a portable terminal.

Therefore, the content controller 259 may determine whether broadcast content can be received through the mobile communication network of a user's portable terminal in a fringe area, and may control the screen display 260 or the sound outputter 261 to notify the user that broadcast content may be received when broadcast content can be received.

In addition, the content controller 259 may receive reception sensitivity information from another terminal on the route in real time according to change in radio wave environment, and may control terminal change or route change.

For example, the content controller 259 may set departure time and display the departure time, thereby guiding a user to avoid a time period during which a fringe area occurs.

In addition, the content controller 259 may provide information on average travel speed so that a user avoids a time period during which a fringe area occurs.

In addition, the content controller 259 may provide location information on rest stops near a fringe area so that a user avoids a time period during which a fringe area occurs.

For example, in addition to information on a fringe area, when information on a time zone during which watching of broadcast content is impossible in the area is provided, the content controller 259 may calculate departure time, average travel speed, and stay time based on occurrence time of the fringe area and time required to reach the fringe area.

As a more specific example, when the current time is 05:00, time required to reach a fringe area is 30 minutes, and the occurrence time of a fringe area is 05:30 to 06:00, the content controller 259 may calculate departure time so that a user starts after 06:00 or 10 minutes later, and may calculate average travel speed in consideration of the departure time.

Therefore, the content controller 259 may calculate adjusted driving information including departure time, average travel speed, and stay time at a rest stop so that a user avoids a time period during which a fringe area occurs, and may control the screen display 260 or the sound outputter 261 to inform the user of the adjusted driving information.

According to one embodiment of the present disclosure, the content controller 259 may determine the relationship between displayed broadcast content and any one of a real-time channel and a media channel.

In addition, when broadcast content is associated with a media channel, the content controller 259 may change the playback time of broadcast content in a determined fringe area.

For example, when broadcast content is associated with a media channel, the content controller 259 may set a time stamp on broadcast content before entering a determined fringe area, and may provide broadcast content from the set time stamp after passing through the fringe area.

For example, when the playback time of broadcast content before a vehicle enters a fringe area is 30 minutes, the content controller 259 may display a time stamp at 30 minutes and provide broadcast content after 30 minutes.

According to one embodiment of the present disclosure, when a user travels by vehicle according to received route guidance while receiving digital broadcast content, reception of the digital broadcast content may be supported by providing a route to the user to avoid a fringe area where radio waves cannot reach.

In addition, according to one embodiment of the present disclosure, a display may be controlled so that a method of receiving broadcast content is displayed, rather than providing a route that bypasses a fringe area where radio waves cannot reach.

In addition, according to one embodiment of the present disclosure, time information may be provided so that a time when a fringe area occurs between a point of departure and a destination is avoided.

According to an embodiment of the present disclosure, it is possible to comprehensively guide vehicle operation (e.g., driving speed, departure time, resting points, and bypass route) so that a user may receive desired broadcast content without any problem.

According to conventional technologies, it is confirmed whether there is an area where broadcast content currently being watched is not received on a basic route to a destination, and a route through which broadcast may be received is suggested when the area where broadcast is not received is present. Accordingly, it is possible to prevent a vehicle from entering the area where broadcast is not received, but comprehensive guidance on vehicle operation is not provided as in the present disclosure.

In addition, the conventional technologies simply provide a travel route in consideration of the reception state of radio waves. In addition, when a vehicle leaves a radio broadcast receiving area, the conventional technologies provide a function of automatically receiving the broadcast signal of the corresponding area. However, the conventional technologies may not provide enhanced services such as route guidance using a reception sensitivity map and suggestion of various alternatives.

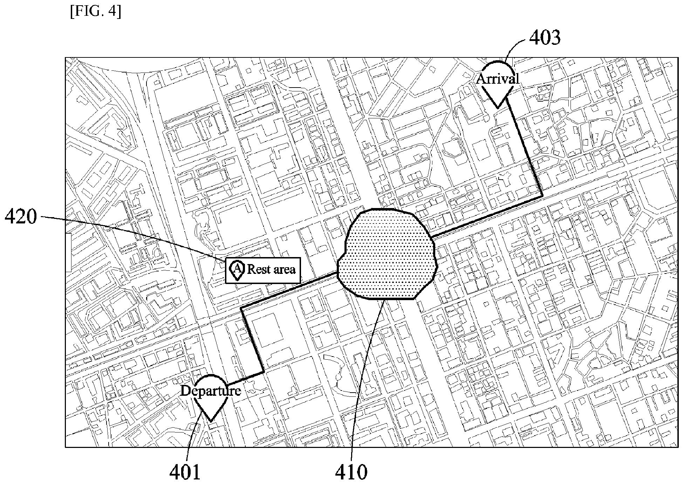

FIG. 4 is a drawing showing an example of displaying a fringe area between a point of departure and a destination in a navigation device.

Referring to FIG. 4, the navigation device may receive information on a point of departure 401 and a destination 403 through the interface 240, and may control the screen display 260 to display a matching map in which a fringe area 410 is marked.

For example, the navigation device may set information on the point of departure 401 based on GPS data received through a GPS receiver.

According to one embodiment of the present disclosure, the navigation device may control the screen display 260 to display a matching map including a route between the point of departure 401 and the destination 403.

For example, the navigation device may control the screen display 260 to mark the point of departure 401 as "departure" and the destination 403 as "arrival".

For example, the navigation device may display a route between the point of departure 401 and the destination 403 as a bold line.

According to one embodiment of the present disclosure, the navigation device may determine the fringe area 410 using a reception sensitivity map, and may generate a matching map including the determined fringe area 410.

For example, the navigation device may control the screen display 260 to display a matching map in which a rest area 420 located before the fringe area 410 is marked. For example, a rest stop may include the rest area 420, and information on rest stop locations may be information related with the rest area 420.

That is, the navigation device may provide guide information to a driver by marking the rest area 420 located before the fringe area 410 on a matching map so that the driver stops at the rest area 420 located before the fringe area 410 and receives broadcast content. In addition, when there is no rest area before the fringe area 410, the navigation device may provide information on rest stops located after the fringe area 410.

In addition, the navigation device may mark the rest area 420 on a matching map to assist a user in checking change in the position of the fringe area 410 in a parked vehicle.

For example, the navigation device may display the matching map of FIG. 4 for the first time before a user travels, and may control the display to display a route to a destination in a way that road driving is preferred. In this case, the navigation device may control so that distance information to the fringe area 410 and distance information to the rest area 420 are displayed at the same time.

In addition, when a vehicle is adjacent to at least one of the fringe area 410 and the rest area 420, the navigation device may control the sound outputter to output guidance information.

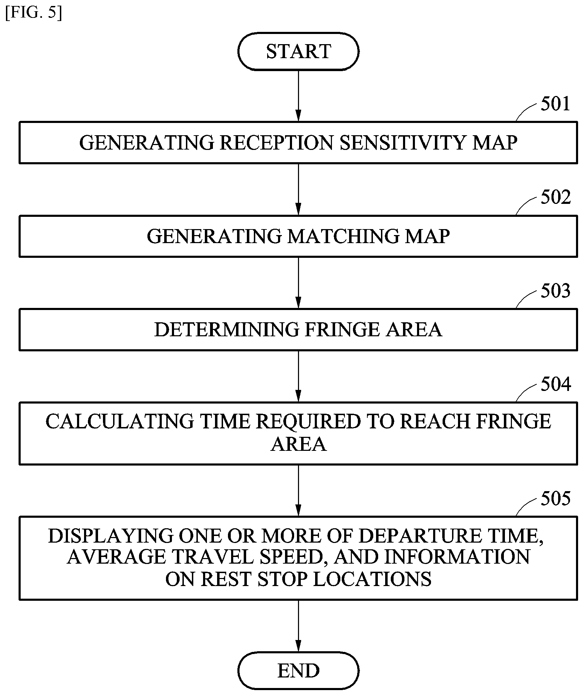

FIG. 5 is a flowchart for explaining a method of operating a navigation device according to one embodiment of the present disclosure.

Specifically, FIG. 5 illustrates a procedure in which time required to reach a fringe area is calculated and reception of broadcast content associated with the fringe area is supported.

Referring to FIG. 5, in Step 501, according to the method of operating the navigation device 110, a reception sensitivity map may be generated.

That is, according to the method of operating the navigation device 110, a broadcast signal may be received from the broadcast system 120, and a reception sensitivity map may be generated based on the received broadcast signal.

In addition, according to the method of operating the navigation device 110, a reception sensitivity map may be generated using any one of accumulated data based on information on the reception strength of a broadcast signal for each area received from the broadcast system 120.

In Step 502, according to the method of operating the navigation device 110, a matching map may be generated.

That is, according to the method of operating the navigation device 110, a matching map may be generated by matching a reception sensitivity map with a navigation map.

That is, according to the method of operating the navigation device 110, a matching map including the reception sensitivity information of a broadcast signal may be generated by matching a plurality of colors on a navigation map using a generated reception sensitivity map according to the reception sensitivity of the broadcast signal.

In Step 503, according to the method of operating the navigation device 110, a fringe area may be determined.

That is, according to the method of operating the navigation device 110, information on a point of departure and a destination input by a user may be received through the interface 240, and a fringe area between the point of departure and the destination may be determined using a stored navigation map.

In Step 504, according to the method of operating the navigation device 110, time required to reach a fringe area may be calculated.

That is, according to the method of operating the navigation device 110, a route between a point of departure and a destination may be guided using a stored navigation map, and a travel time to a determined fringe area may be calculated.

In Step 505, according to the method of operating the navigation device 110, one or more of departure time, average travel speed, and information on rest stop locations may be displayed.

That is, according to the method of operating the navigation device 110, the screen display 260 may be controlled to display one or more of departure time, average travel speed, and information on rest stop locations based on calculated travel time.

For example, according to the method of operating the navigation device 110, departure time may be set and displayed so that a user avoids a time period during which a fringe area occurs.

In addition, according to the method of operating the navigation device 110, average travel speed may be provided so that a user avoids a time period during which a fringe area occurs.

In addition, according to the method of operating the navigation device 110, location information on rest stops near a fringe area may be provided so that a user avoids a time period during which a fringe area occurs.

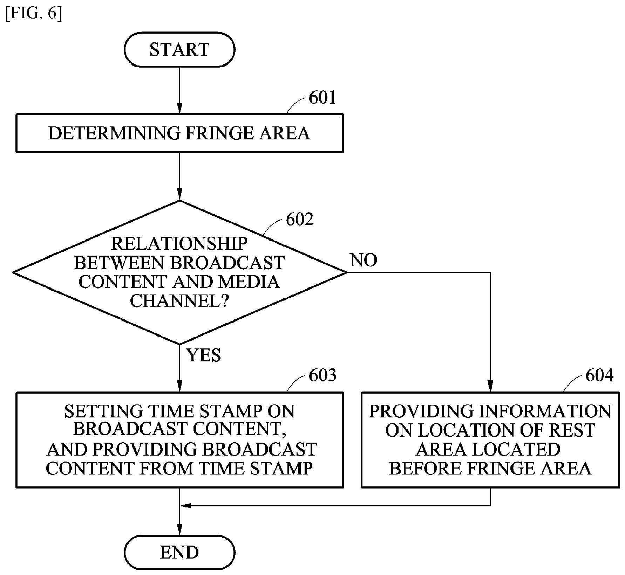

FIG. 6 is a flowchart for explaining a method of operating a navigation device according to one embodiment of the present disclosure.

Specifically, FIG. 6 illustrates a procedure in which, whether broadcast content requires real-time property or is a media-related channel for simple listening is determined, and received broadcast content is provided.

Referring to FIG. 6, in Step 601, according to the method of operating the navigation device 110, a fringe area may be determined.

That is, according to the method of operating the navigation device 110, information on a point of departure and a destination input by a user may be received through the interface 240, and a fringe area between the point of departure and the destination may be determined using a stored navigation map.

In Step 602, according to the method of operating the navigation device 110, whether broadcast content is associated with a media channel is determined.

That is, according to the method of operating the navigation device 110, whether received broadcast content is broadcast content requiring real-time property or content of a recorded media-related channel may be determined using a broadcast signal.

Therefore, according to the method of operating the navigation device 110, when broadcast content is a media channel, Step 603 may be performed. When broadcast content is an emergency disaster broadcast channel requiring real-time property, Step 604 may be performed.

In Step 603, according to the method of operating the navigation device 110, a time stamp may be set in broadcast content, and broadcast content may be provided from the time stamp.

That is, according to the method of operating the navigation device 110, a time stamp may be set in a timeline of broadcast content immediately before entering a determined fringe area, and broadcast content may be provided after the set time stamp after passing through the fringe area.

In Step 604, according to the method of operating the navigation device 110, information on the location of a rest stop located before a fringe area may be provided.

That is, according to the method of operating the navigation device 110, information on the location of a rest stop located before a fringe area determined in Step 601 may be displayed so that a user watches broadcast content in real time at the rest stop.

According to the present disclosure, when a user travels by vehicle according to received route guidance while receiving digital broadcast content, reception of the digital broadcast content can be supported by providing a route to the user to avoid a fringe area where radio waves cannot reach.

According to the present disclosure, a display can be controlled so that a method of receiving broadcast content is displayed, rather than providing a route that bypasses a fringe area where radio waves cannot reach.

According to the present disclosure, time information can be provided so that a time when a fringe area occurs between a point of departure and a destination is avoided.

The methods according to claims of the present disclosure or the embodiments described in the specification may be implemented in hardware, software, or a combination of hardware and software.

The software may be stored in a computer-readable storage medium. When executed by at least one program (software module) or at least one processor, the computer-readable storage medium stores at least one program that includes instructions that cause the electronic device to perform the method of the present disclosure.

Such software may be stored on optical or magnetic readable media, such as compact disc-ROM (CD-ROM), digital versatile discs (DVDs), magnetic disks, or magnetic tapes, in the form of a volatile storage device or a non-volatile storage device such as read only memory (ROM), or in the form of a memory such as random access memory (RAM), memory chips, or integrated circuits.

The storage device and medium are machine-readable storage means suitable for storing programs including instructions for implementing embodiments when executed.

Embodiments provide a program including code for implementing the apparatus or method as claimed herein, and a machine-readable storage medium storing such a program.

Furthermore, such a program may be electronically transmitted by any medium, such as a communication signal transmitted through wired or wireless connection, and embodiments suitably include equivalents.

In the above-described specific embodiments, elements included in the disclosure are expressed in singular or plural in accordance with the specific embodiments.

However, the singular or plural representations are appropriately selected for the situation presented for convenience of explanation, and the above-described embodiments are not limited to the singular or plural constituent elements. In addition, elements may be composed of the singular number, even when the elements are expressed in the plural number, and an element may be composed of the plural number, even when the element is expressed in the singular number.

In addition, the present disclosure has been described with reference to exemplary embodiments, but it should be understood that various modifications may be made without departing from the scope of the present disclosure.

Therefore, the scope of the present disclosure should not be limited by the embodiments, but should be determined by equivalents to the claims, as well as the appended claims.

### [Description of Symbols]

- 110:: BROADCAST SYSTEM
- 110:: NAVIGATION DEVICE
- 200:: NAVIGATION DEVICE
- 210:: MEMORY
- 220:: GPS RECEIVER
- 230:: USER INPUTTER
- 240:: INTERFACE
- 250:: NAVIGATION CONTROLLER
- 260:: SCREEN DISPLAY
- 261:: SOUND OUTPUTTER
- 270:: COMMUNICATOR

## Claims

1. A navigation device using a reception sensitivity map, comprising:
a reception sensitivity map generator for generating a reception sensitivity map based on reception sensitivity information on a broadcast signal;
a matching map generator for loading a navigation map corresponding to an identified route based on route search history information, and matching a reception sensitivity map of an area comprised in the loaded navigation map with the loaded navigation map to generate a matching map;
a fringe area determining processor for receiving information on a point of departure and a destination input by a user through an interface, and determining a fringe area between the point of departure and the destination using the generated matching map;
a travel time calculator for guiding a route between the point of departure and the destination using the generated matching map, and calculating time required to travel to the determined fringe area; and
a content controller for controlling a screen display or a sound outputter to output one or more of departure time, average travel speed, and information on rest stop locations based on the calculated travel time.

2. The navigation device according to claim 1, wherein the travel time calculator collects information on traffic conditions based on the received broadcast signal, and calculates the travel time using the collected information on traffic conditions and vehicle speed.

3. The navigation device according to claim 1, wherein, when a vehicle equipped with the navigation device is located in the determined fringe area, the content controller indirectly receives the broadcast signal through a portable terminal of the user to provide broadcast content.

4. The navigation device according to claim 3, wherein the content controller determines a relationship between the displayed broadcast content and any one of a real-time channel and a media channel, and changes playback time of the broadcast content in the determined fringe area when the broadcast content is associated with the media channel.

5. The navigation device according to claim 4, wherein, when the broadcast content is associated with the media channel, the content controller sets a time stamp on the broadcast content before entering the determined fringe area, and provides the broadcast content from the set time stamp after passing through the fringe area.

6. The navigation device according to claim 1, wherein the content controller determines whether reception of broadcast content through a mobile communication network of a portable terminal of the user is possible in the fringe area, and when reception of the broadcast content is possible, the content controller controls the screen display or the sound outputter to output guidance information indicating that reception of the broadcast content is possible.

7. The navigation device according to claim 1, wherein the reception sensitivity map generator generates the reception sensitivity map using any one of accumulated data based on information on strength of a broadcast signal for each area received from the broadcast system and the reception strength of the broadcast signal.

8. The navigation device according to claim 1, wherein the matching map generator generates the matching map comprising reception sensitivity information of the broadcast signal by matching a plurality of colors on the navigation map using the generated reception sensitivity map according to the reception sensitivity of the broadcast signal.

9. The navigation device according to claim 1, wherein the content controller calculates adjusted driving information comprising departure time, average travel speed, and stay time at the rest stop so that consumption of broadcast content is completed before reaching the fringe area from the point of departure, and controls the screen display or the sound outputter to display the adjusted driving information; and
when complete consumption of broadcast content is not possible before reaching the fringe area from the point of departure, the content controller confirms type information of the broadcast content, confirms broadcast type information of another channel capable of being received upon reaching the fringe area, and switches a broadcast reception channel to another channel that transmits broadcast similar to type information of the broadcast content when actual reception sensitivity of the broadcast content is less than a predetermined value.

10. The navigation device according to claim 1, wherein the content controller calculates adjusted driving information comprising departure time, average travel speed, and stay time at the rest stop to avoid a time period during which the determined fringe area occurs, and controls the screen display or the sound outputter to display the adjusted driving information.

11. A method of operating a navigation device using a reception sensitivity map, comprising:
in a reception sensitivity map generator, generating a reception sensitivity map based on reception sensitivity information on a broadcast signal;
in a matching map generator, loading a navigation map corresponding to an identified route based on route search history information, and matching a reception sensitivity map of an area comprised in the loaded navigation map with the loaded navigation map to generate a matching map;
in a fringe area determining processor, receiving information on a point of departure and a destination input by a user through an interface, and determining a fringe area between the point of departure and the destination using the generated matching map;
in a travel time calculator, guiding a route between the point of departure and the destination using the generated matching map, and calculating time required to travel to the determined fringe area; and
in a content controller, controlling a screen display or a sound outputter to output one or more of departure time, average travel speed, and information on rest stop locations based on the calculated travel time.

12. The method according to claim 11, wherein the calculating comprises collecting information on traffic conditions based on the received broadcast signal, and calculating the travel time using the collected information on traffic conditions and vehicle speed.

13. The method according to claim 11, further comprising:
in the content controller, providing broadcast content by indirectly receiving the broadcast signal through a portable terminal of the user when a vehicle equipped with the navigation device is located in the determined fringe area,
wherein the providing comprises determining a relationship between the displayed broadcast content and any one of a real-time channel and a media channel; and
changing playback time of the broadcast content in the determined fringe area or setting a time stamp on the broadcast content before entering the determined fringe area and providing the broadcast content from the set time stamp after passing through the fringe area when the broadcast content is associated with the media channel.

14. The method according to claim 11, wherein the generating of a reception sensitivity map comprises generating the reception sensitivity map using any one of accumulated data based on information on strength of a broadcast signal for each area received from the broadcast system and the reception strength of the broadcast signal.

15. The method according to claim 11, wherein the generating of a matching map comprises generating the matching map comprising reception sensitivity information of the broadcast signal by matching a plurality of colors on the navigation map using the generated reception sensitivity map according to the reception sensitivity of the broadcast signal.
